# EUROPÄISCHE PATENTSCHRIFT

(11) **EP 3 688 409 B1**
(45) Veröffentlichungstag und Bekanntmachung des Hinweises auf die Patenterteilung: **25.01.2023**
(21) Anmeldenummer: 18731043.8
(22) Anmeldetag: 11.06.2018
(51) Int. Cl.: G01B 21/26

(54) **VERFAHREN ZUR BESTIMMUNG EINES RADSTURZES ODER EINER SPUR**
METHOD FOR DETERMINING A WHEEL CAMBER OR A TOE
PROCÉDÉ DE DÉTERMINATION D'UN CARROSSAGE OU D'UN PINCEMENT DE ROUE

(30) Priorität: 28.09.2017 DE 102017217309
(43) Veröffentlichungstag der Anmeldung: 05.08.2020
(73) Patentinhaber: Continental Reifen Deutschland GmbH, 30165 Hannover (DE)
(72) Erfinder: SAHLMÜLLER, Baldo, 30163 Hannover (DE); LEHMANN, Jörg, 30453 Hannover (DE)
(74) Vertreter: Continental Corporation
(86) Internationale Anmeldenummer: PCT/EP2018/065248
(87) Internationale Veröffentlichungsnummer: WO 2019/063142

(56) Entgegenhaltungen:
- DE-A1-102010 055 378
- DE-T2-602004 012 903
- US-A1- 2015 221 144

## Beschreibung

Die vorliegende Erfindung bezieht sich auf ein Verfahren zur Bestimmung eines Radsturzes oder einer Spur sowie auf eine Vorrichtung zur Durchführung eines Verfahrens zur Bestimmung eines Radsturzes oder einer Spur. Eine Vorrichtung wird jedoch nicht beansprucht.

Die Erfindung geht aus von einem Verfahren zur Bestimmung eines Radsturzes oder einer Spur. Dabei wird in einem ersten Schritt mindestens eine erste Sensorvorrichtung bereitgestellt und mindestens eine zweite Sensorvorrichtung bereitgestellt und mindestens eine Auswertevorrichtung bereitgestellt. Die mindestens eine erste Sensorvorrichtung und die mindestens eine zweite Sensorvorrichtung sind zur Erfassung von Beschleunigungen vorgesehen.

Die mindestens eine Auswertevorrichtung ist zur Auswertung der mittels der mindestens einen ersten und der mindestens einen zweiten Sensorvorrichtung erfassten Beschleunigungen vorgesehen.

Bei einem Radsturz handelt es sich um einen Winkel, der von einer Radmittelebene und einer Senkrechten zu einer Fahrbahn gebildet wird. Dabei handelt es sich bei der Fahrbahn um die Fahrbahn, auf der das Rad rollt.

Bei einer Spur handelt es sich um einen Winkel, der von der Radmittelebene und einem Fahrtrichtungsvektor eines Fahrzeugs gebildet wird.

Die Räder sind Bestandteile des Fahrzeugs. Der Fahrtrichtungsvektor zeigt in die Richtung in der sich das Fahrzeug fährt, also in die Fahrtrichtung.

Bei dem Fahrzeug kann es sich insbesondere um ein Kraftfahrzeug handeln.

Bei einer Radmittelebene handelt es sich um eine rechtwinklig zu einer Rotationsachse des Rades liegende Symmetrieebene des Rades. Ein Vektor einer Umlaufrichtung des Rades ist dabei von solchen Vektoren, die die Radmittelebene festlegen, linear abhängig.

Bei der Rotationsachse des Rades handelt es sich um die Achse, um die das Rad und ein auf dem Rad angebrachter Luftreifen in Umlaufrichtung des Luftreifens rotieren.

Aus dem Stand der Technik sind beispielsweise Verfahren und Vorrichtungen zur Bestimmung von Schräglaufwinkeln eines Rades während des Fahrens eines Fahrzeuges bekannt. Der Schräglaufwinkel entspricht einer Spur.

Beispielsweise wird in der DE602004012903T2 ein Verfahren offenbart, bei dem ein Schräglaufwinkel eines Rades derart bestimmt wird, dass eine Querbeschleunigung mittels eines Sensors an dem Rad erfasst und anschließend verarbeitet wird. Die Querbeschleunigung ist dabei eine Beschleunigung, die parallel zu einer Rotationsachse des Rades gerichtet ist.

Bei dem aus dem Stand der Technik bekannten Verfahren zur Bestimmung eines Radsturzes oder einer Spur mittels einer Beschleunigungsmessung könnten Kurvenfahrten des Fahrzeuges mit Schrägstellungen, also Spuren, der einzelnen Räder des Fahrzeuges verwechselt werden. Hintergrund dieser Verwechslung ist, dass im Fall einer Kurvenfahrt eines Fahrzeuges und im Fall einer Schrägstellung des Rades, also einer tatsächlichen Spur oder eines tatsächlichen Radsturzes, Querbeschleunigungen an dem Rad auftreten.

DE102010055378A1 offenbart eine Vorrichtung und ein Verfahren zum Ermitteln von Fahrwerksgrößen. US2015/0221144A1 offenbart eine Radausrichtungsmessung.

Der Erfindung liegt daher die Aufgabe zugrunde, einen Radsturz oder eine Spur genauer und zuverlässiger zu bestimmen.

Gelöst wird die gestellte Aufgabe erfindungsgemäß dadurch, dass in einem weiteren Schritt des Verfahrens ein erster Beschleunigungswert eines ersten Reifens erfasst wird und ein zweiter Beschleunigungswert eines zweiten Reifens erfasst wird, wobei der erste Reifen und der zweite Reifen auf Rädern einer gemeinsamen Achse angeordnet sind und es sich bei dem ersten Beschleunigungswert und dem zweiten Beschleunigungswert um Werte von Beschleunigungen des ersten Reifens und des zweiten Reifens handelt, die jeweils parallel zu der Rotationsachse des ersten Reifens beziehungsweise parallel zu der Rotationsachse des zweiten Reifens gerichtet sind.

Die Rotationsachse eines Reifens stimmt mit der Rotationsachse eines Rades, dessen Bestandteil der Reifen ist, überein.

Bei der gemeinsamen Achse handelt es sich um eine Fahrzeugachse.

Insbesondere kann das erfindungsgemäße Verfahren an jeder Achse eines Kraftfahrzeugs angewendet werden.

Durch den Umstand, wonach ein erster Beschleunigungswert eines ersten Reifens erfasst wird und ein zweiter Beschleunigungswert eines zweiten Reifens erfasst wird, wobei der erste Reifen und der zweite Reifen auf einer gemeinsamen Achse angeordnet sind und es sich bei dem ersten Beschleunigungswert und dem zweiten Beschleunigungswert um Werte von Beschleunigungen handelt, die jeweils parallel zur Rotationsachse des ersten Reifens beziehungsweise des zweiten Reifens gerichtet sind, kann genau und zuverlässig zwischen einer Kurvenfahrt und einem Radsturz oder einer Spur eines Reifens unterschieden werden. Hintergrund ist, dass eine Kurvenfahrt insbesondere regelmäßig zu einem gleichmäßigen Kippen der Radmittelebenen des ersten Reifens und des zweiten Reifens führen kann. Die Räder und somit die auf den Rädern angeordneten Reifen erfahren jedenfalls Querbeschleunigungen, die zueinander in einem für Kurvenfahrten charakteristischen Verhältnis stehen.

Im Fall einer Ausbildung unterschiedlicher Radstürze oder Spuren des ersten Reifens und des zweiten Reifens stehen die Querbeschleunigungen regelmäßig nicht in dem für Kurvenfahrten charakteristischen Verhältnis.

Anhand der Verschiedenheit der Verhältnisse der Querbeschleunigungen zueinander kann somit zuverlässig auf den Umstand geschlossen werden, ob eine Kurvenfahrt oder ein Radsturz oder eine Spur vorliegt. Darüber hinaus können der Radsturz und die Spur des ersten Reifens und/oder der Radsturz und die Spur des zweiten Reifens präziser bestimmt werden.

Insgesamt wird ein zuverlässigeres Verfahren zur Bestimmung des Umstandes, ob ein Radsturz oder eine Spur vorliegt und in welchem Ausmaß der Radsturz oder die Spur vorliegt, bereit gestellt.

Weitere Schritte des erfindungsgemäßen Verfahrens sind, dass in einem weiteren Schritt der erste Beschleunigungswert mit dem zweiten Beschleunigungswert verglichen wird, dann anschließend ein Vergleichswert anhand des Vergleichs des ersten Beschleunigungswertes mit dem zweiten Beschleunigungswert erzeugt wird, dann anschließend der Vergleichswert mit einem Referenzwert mittels der mindestens einen Auswertevorrichtung verglichen wird und schließlich eine Ergebnisinformation mittels der mindestens einen Auswertevorrichtung erzeugt wird, wobei die Ergebnisinformation in Abhängigkeit des Vergleichswertes mit dem Referenzwert gewonnen wurde.

Die Erfindung betrifft ferner eine Vorrichtung zur Durchführung eines erfindungsgemäßen Verfahrens. Eine Vorrichtung wird jedoch nicht beansprucht.

Die Vorrichtung weist insbesondere mindestens eine erste Sensorvorrichtung, mindestens eine zweite Sensorvorrichtung und mindestens eine Auswertevorrichtung auf. Die mindestens eine erste und die mindestens eine zweite Sensorvorrichtung sind zur Erfassung von Beschleunigungen vorgesehen; die Auswertevorrichtung ist zur Verarbeitung der mittels der Sensorvorrichtungen erfassten Beschleunigungen vorgesehen. Weitere vorteilhafte Ausgestaltungsformen der vorliegenden Erfindung sind Gegenstand der Unteransprüche.

Gemäß einer vorteilhaften Ausgestaltungsform der Erfindung ist die mindestens eine Auswertevorrichtung geeignet, die mindestens eine erste Sensorvorrichtung und/oder die mindestens eine zweite Sensorvorrichtung zu steuern und eine Messung von Beschleunigungswerten einzuleiten. Dazu sendet die mindestens eine Auswertevorrichtung ein Signal an die mindestens eine erste Sensorvorrichtung und/oder ein Signal an die mindestens eine zweite Sensorvorrichtung, wobei in Abhängigkeit eines solchen Signals eine Beschleunigung mittels der mindestens einen ersten Sensorvorrichtung und/oder der mindestens einen zweiten Sensorvorrichtung erfasst werden.

Insbesondere kann die mindestens eine Auswertevorrichtung geeignet sein, in bestimmten Zeitintervallen die Sensorvorrichtungen derart anzusteuern, dass Beschleunigungen erfasst werden. Beispielsweise kann ein solches Zeitintervall einer Minute entsprechen.

Gemäß einer vorzugsweisen Ausgestaltungsform der Erfindung werden in Abhängigkeit der Ergebnisinformation ein erster Radsturz und/oder eine erste Spur eines ersten Rades und ein zweiter Radsturz und/oder eine zweite Spur eines zweiten Rades ermittelt. Dabei ist der erste Reifen auf dem ersten Rad angeordnet und der zweite Reifen ist auf dem zweiten Rad angeordnet.

Gemäß einer nächsten vorzugsweisen Ausgestaltungsform der Erfindung werden der erste Beschleunigungswert und der zweite Beschleunigungswert in jeweils regelmäßigen Zeitabständen, beispielsweise alle 10 bis 20 Sekunden, vorzugsweise alle 12, 14 oder 16 Sekunden, erfasst.

Alternativ kann der erste Beschleunigungswert genau einmal während jeder vollständigen Umdrehung des ersten Reifens und der zweite Beschleunigungswert genau einmal während jeder vollständigen Umdrehung des zweiten Reifens erfasst werden.

Eine vollständige Umdrehung des ersten Reifens oder des zweiten Reifens ist dann gegeben, wenn sich der Reifen einmal um 360 Grad gedreht hat.

Gemäß einer nächsten vorzugsweisen Ausgestaltungsform der Erfindung werden für den Fall, wenn die mindestens eine erste Sensorvorrichtung an einer Reifeninnenfläche des ersten Reifens angeordnet ist und die mindestens eine zweite Sensorvorrichtung an einer Reifeninnenfläche des zweiten Reifens angeordnet ist, der erste Beschleunigungswert erfasst, wenn sich die mindestens eine erste Sensorvorrichtung nicht in einem Bodenaufstandsflächenbereich des ersten Reifens befindet, und der zweite Beschleunigungswert erfasst, wenn sich die mindestens eine zweite Sensorvorrichtung nicht in einem Bodenaufstandsflächenbereich des zweiten Reifens befindet.

Bei einem Bodenaufstandsflächenbereich des Reifens handelt es sich um einen solchen Bereich des Reifens, der während des Abrollens des Reifens in unmittelbaren physischem Kontakt mit der Fahrbahn gerät oder durch das Abrollen des Reifens physisch beeinflusst wird.

Für den Fall, dass eine Beschleunigungsmessung in einem Bereich vorgenommen wird, der zu dem Zeitpunkt der Messung in unmittelbarem physischen Kontakt mit der Fahrbahn steht, könnten entweder gar keine Beschleunigungen erfasst werden oder aber solche Beschleunigungen, die nicht in Zusammenhang mit einem Radsturz, einer Spur oder einer Kurvenfahrt stehen, sondern durch beispielsweise Verformungen des Reifens im Bodenaufstandsflächenbereich oder durch den Aufschlag des Bodenaufstandsflächenbereichs auf die Fahrbahn erzeugt werden.

Durch den erfindungsgemäßen Umstand, wonach für den Fall, wonach die mindestens eine erste Sensorvorrichtung an einer Reifeninnenfläche des ersten Reifens angeordnet ist und die mindestens eine zweite Sensorvorrichtung an einer Reifeninnenfläche des zweiten Reifens angeordnet ist, der erste Beschleunigungswert erfasst wird, wenn sich die mindestens eine erste Sensorvorrichtung nicht in einem Bodenaufstandsflächenbereich des ersten Reifens befindet, und der zweite Beschleunigungswert erfasst wird, wenn sich die mindestens eine zweite Sensorvorrichtung nicht in einem Bodenaufstandsflächenbereich des zweiten Reifens befindet, wird das Verfahren zuverlässiger gestaltet. Das Erfassen einer Beschleunigung, die durch die Wechselwirkung des Bodenaufstandsflächenbereichs des Reifens mit der Fahrbahn erzeugt werden könnte, wird vermieden.

Gemäß einer nächsten vorzugsweisen Ausgestaltungsform der Erfindung wird die Ergebnisinformation an mindestens eine Wiedergabevorrichtung übertragen und von der mindestens einen Wiedergabevorrichtung wiedergegeben.

Bei der Wiedergabevorrichtung kann es sich insbesondere um eine akustisch wirkende und/oder um eine optisch wirkende Wiedergabevorrichtung handeln.

Die Wiedergabevorrichtung kann derart in einem Fahrzeuginnenraum des Fahrzeugs derart angebracht werden, dass sie für einen Fahrzeugführer wahrnehmbar ist. Die Wiedergabevorrichtung kann auch außerhalb des Fahrzeugs angeordnet sein.

Der Fahrzeugführer kann mittels der Wiedergabevorrichtung über Fehlstellungen der Räder, die in Abhängigkeit der ermittelten Radstürze oder Spuren ermittelt werden können, informiert werden.

Gemäß einer nächsten vorzugsweisen Ausgestaltungsform der Erfindung wird mittels der mindestens einen ersten Sensorvorrichtung und mittels der mindestens einen zweiten Sensorvorrichtung jeweils ein weiterer Beschleunigungswert erfasst. Dabei handelt es sich bei den weiteren Beschleunigungswerten um Werte von Beschleunigungen, die parallel und/oder rechtwinklig zu einer Umlaufrichtung des ersten Reifens beziehungsweise parallel und/oder rechtwinklig zu einer Umlaufrichtung des zweiten Reifens gerichtet sind. Alternativ oder zusätzlich handelt es sich bei den weiteren Beschleunigungswerten um Werte von Beschleunigungen, die rechtwinklig zu der Rotationsachse des ersten Reifens beziehungsweise rechtwinklig zu der Rotationsachse des zweiten Reifens gerichtet sind.

Auf Grundlage dieser Werte weiterer Beschleunigungen können andere Eigenschaften des ersten oder des zweiten Reifens bestimmt werden. Zu den anderen Eigenschaften gehört beispielsweise eine Profiltiefe eines Profils des ersten oder des zweiten Reifens.

Gemäß einer nächsten vorzugsweisen Ausgestaltungsform der Erfindung wird mittels der mindestens einen Auswertevorrichtung ein erster erster Beschleunigungswert des ersten Reifens mit einem zeitlich danach erfassten zweiten ersten Beschleunigungswert des ersten Reifens verglichen. Alternativ oder zusätzlich wird ein erster zweiter Beschleunigungswert des zweiten Reifens mit einem zeitlich danach erfassten zweiten zweiten Beschleunigungswert des zweiten Reifens verglichen. Somit kann ein Beschleunigungsverlauf erstellt und analysiert werden.

In Abhängigkeit des Beschleunigungsverlaufs kann zudem eine Anzahl vollständiger Rotationen des ersten und/oder des zweiten Reifens bestimmt werden Gemäß einer nächsten vorzugsweisen Ausgestaltungsform der Erfindung kann für den Fall, dass das erste Rad oder das zweite Rad einen Radsturz von 0 Grad aufweist, der gemessene Querbeschleunigungswert des jeweils anderen Reifens bezüglich des Rades mit einem Radsturz von 0 Grad normiert werden und/oder mit einer Spur von 0 Grad normiert werden. Dadurch können im Fall des Rades, an dessen Reifen eine Querbeschleunigung gemessen wird, ein genauer Winkel des Radsturzes und/oder ein genauer Winkel der Spur einer Querbeschleunigung eindeutig zugeordnet werden.

Gemäß einer nächsten vorzugsweisen Ausgestaltungsform der Erfindung weist die erfindungsgemäße Vorrichtung mindestens eine Wiedergabevorrichtung, insbesondere mindestens eine akustisch wirkende und/oder eine optisch wirkende Wiedergabenvorrichtung, auf.

Weitere Merkmale, Vorteile und Einzelheiten, auf die die Erfindung in ihrem Umfang aber nicht beschränkt ist, werden aber nun anhand der Zeichnungen näher beschrieben.

Die Erfindung ist im unabhängigen Anspruch 1 definiert.

Es zeigt:
Fig. 1 eine schematische Darstellung des erfindungsgemäßen Verfahrens;
Fig. 2 eine schematische Darstellung einer erfindungsgemäßen Vorrichtung; eine Vorrichtung wird jedoch nicht beansprucht;
Fig. 3 eine schematische Darstellung der Anwendung einer erfindungsgemäßen Vorrichtung; eine Vorrichtung wird jedoch nicht beansprucht;
Fig.4 eine schematische Darstellung eines Fahrzeugs zur Verbildlichung einer Spur eines Reifens.

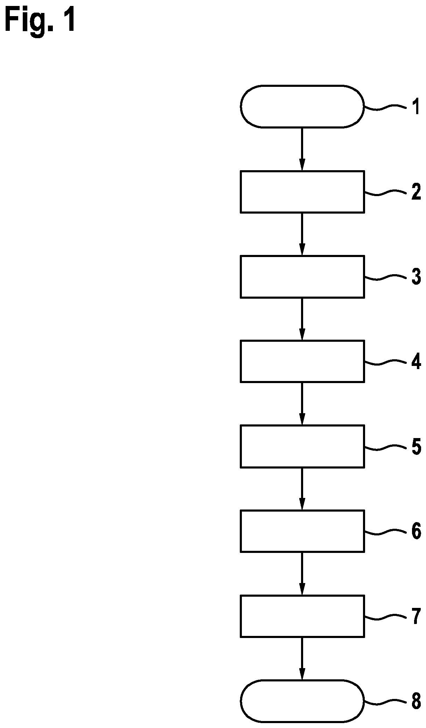

In der Figur 1 ist ein erfindungsgemäßes Verfahren zur Bestimmung eines Radsturzes oder einer Spur schematisch dargestellt. Mit Verfahrenseinleitungsschritt 1 wird das Verfahren zur Bestimmung eines Radsturzes oder einer Spur eingeleitet.

In dem darauf folgenden Bereitstellungsschritt 2 werden mindestens eine erste Sensorvorrichtung und mindestens eine zweite Sensorvorrichtung und mindestens eine Auswertevorrichtung bereitgestellt. Dabei sind die mindestens eine erste Sensorvorrichtung und die mindestens eine zweite Sensorvorrichtung zur Erfassung von Beschleunigungen vorgesehen, die mindestens eine Auswertevorrichtung ist zur Auswertung der erfassten Beschleunigungen vorgesehen.

In dem darauf folgenden Erfassungsschritt 3 werden ein erster Beschleunigungswert eines ersten Reifens und ein zweiter Beschleunigungswert eines zweiten Reifens erfasst. Der erste Reifen und der zweite Reifen sind auf einer gemeinsamen Achse angeordnet. Bei dem ersten Beschleunigungswert und bei dem zweiten Beschleunigungswert handelt es sich um Werte von Beschleunigungen des ersten und des zweiten Reifens, wobei die Beschleunigungen jeweils parallel zu der Rotationsachse des ersten Reifens beziehungsweise des zweiten Reifens gerichtet sind.

In dem darauf folgenden Vergleichsschritt 4 wird der erste Beschleunigungswert mit dem zweiten Beschleunigungswert verglichen.

In dem darauf folgenden Erzeugungsschritt 5 wird ein Vergleichswert anhand des Vergleichs des ersten Beschleunigungswertes mit dem zweiten Beschleunigungswert erzeugt.

In dem darauf folgenden zweiten Vergleichsschritt 6 wird der Vergleichswert mit einem Referenzwert mittels der mindestens einen Auswertvorrichtung verglichen.

In dem darauf folgenden zweiten Erzeugungsschritt 7 wird eine Ergebnisinformation mittels der Auswertevorrichtung erzeugt. Dabei wurde die Ergebnisinformation in Abhängigkeit des Vergleichs des Vergleichswertes mit dem Referenzwert gewonnen.

Mit Abschlussschritt 8 wird das Verfahren abgeschlossen.

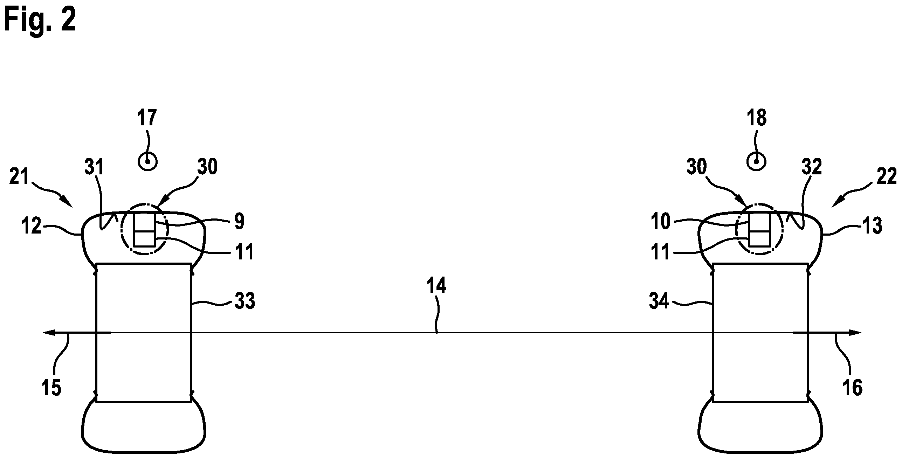

In der Figur 2 ist eine erfindungsgemäße Vorrichtung 30 schematisch dargestellt. Die erfindungsgemäße Vorrichtung 30 weist mindestens eine erste Sensorvorrichtung 9 und mindestens eine zweite Sensorvorrichtung 10 und mindestens eine Auswertevorrichtung 11 auf. Die erfindungsgemäße Vorrichtung 30 weist als System mehrere Komponenten auf, die räumlich voneinander getrennt eingesetzt werden können.

Gemäß der Darstellung in der Figur 2 weist die Vorrichtung 30 zwei Auswertevorrichtungen 11 auf. Dabei ist an jeder Sensorvorrichtung 9, 10 eine Auswertevorrichtung 11 angeordnet. Zusätzlich oder alternativ kann mindestens eine Auswertevorrichtung innerhalb des Fahrzeugs, beispielswiese in einem Innenraum des Fahrzeugs, in dem sich der Fahrzeugführer befindet, angeordnet sein. Diese zusätzliche oder alternative Auswertevorrichtung ist zur Auswertung der erfassten Beschleunigungen vorgesehen.

Die mindestens eine erste Sensoreinrichtung 9 ist in einem ersten Reifen 12 angeordnet. Die mindestens eine zweite Sensorvorrichtung 10 ist in einem zweiten Reifen 13 angeordnet. Der erste Reifen 12 und der zweite Reifen 13 ist jeweils in Radialschnittansicht dargestellt. Der erste Reifen 12 und der zweite Reifen 13 sind auf einer gemeinsamen Achse 14 angeordnet. Eine Rotationsachse 15 des ersten Reifens 12 und eine Rotationsachse 16 des zweiten Reifens 13 sind weitetestgehend parallel zu der gemeinsamen Achse 14 orientiert. Der erste Reifen 12 rotiert in Umlaufrichtung 17 um die Rotationsachse 15, der zweite Reifen 13 rotiert in Umlaufrichtung 18 um die Rotationsachse 16.

Der erste Reifen 12 ist auf einer ersten Felge 33 angeordnet und bildet mit ihr ein erstes Rad 21. Der zweite Reifen 13 ist auf einer zweiten Felge 34 angeordnet und bildet mit ihr ein zweites Rad 22.

Die mindestens eine erste Sensorvorrichtung 9 ist auf einer Reifeninnenfläche 31 des ersten Reifens 12 angeordnet; die mindestens eine zweite Sensorvorrichtung 10 ist auf einer Reifeninnenfläche 32 des zweiten Reifens 13 angeordnet.

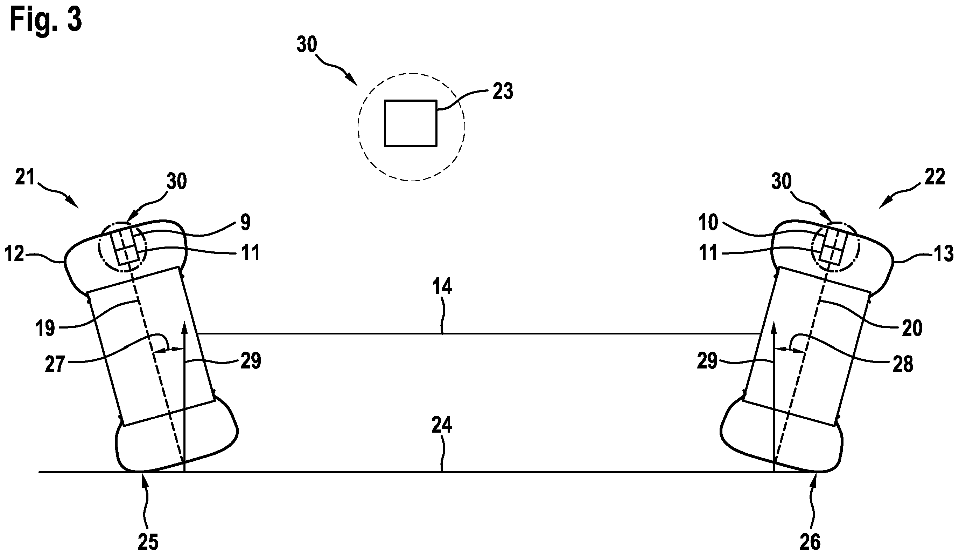

In der Figur 3 ist die Anwendung einer erfindungsgemäßen Vorrichtung 30 gemäß einer weiteren Ausgestaltungsform schematisch dargestellt.

Der erste Reifen 12 weist eine erste Radmittelebene 19 auf, der zweite Reifen 13 weist eine zweite Radmittelebene 20 auf. Die Auswertevorrichtung 11 ist insbesondere mit einer Wiedergabevorrichtung 23 verbunden, beispielsweise über Funk. Eine Ergebnisinformation kann an die Wiedergabevorrichtung 23 übertragen und von der Wiedergabevorrichtung 23 wieder gegeben werden. Bei der Wiedergabevorrichtung handelt es sich insbesondere um eine akustisch wirkende und/oder optisch wirkende Wiedergabevorrichtung 23.

Der erste Reifen 12 und der zweite Reifen 13 rollen auf einer Fahrbahn 24. Ein Bodenaufstandsflächenbereich 25 des ersten Reifens 12 und ein Bodenaufstandsflächenbereich 26 des zweiten Reifen 13 stehen in unmittelbaren Kontakt mit der Fahrbahn 24.

Das erste Rad 21 und/ oder das zweite Rad 22 können jeweils einen Radsturz 27 beziehungsweise 28 aufweisen. Der Radsturz 27 oder der Radsturz 28 entspricht einem Winkel der ersten Radmittelebene 19 beziehungsweise der zweiten Radmittelebene 20 zu einem Normalvektor 29 der Fahrbahn 24.

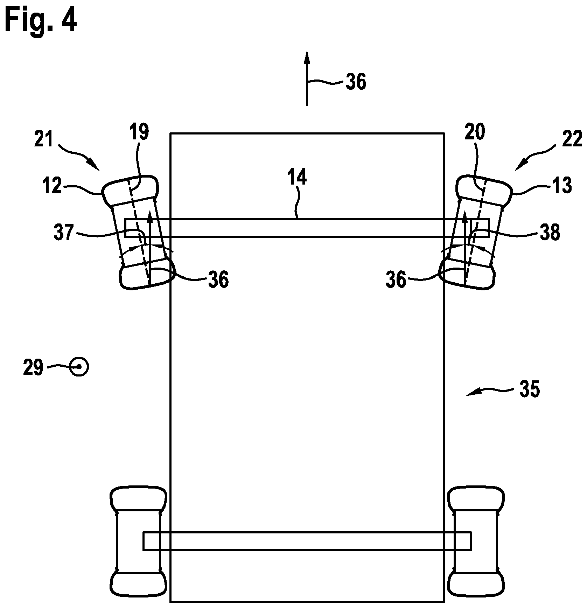

In der Figur 4 ist ein Fahrzeug 35 zur Verbildlichung einer Spur schematisch dargestellt. An der Achse 14 des Fahrzeugs 35 sind der erste Reifen 12 und der zweite Reifen 13 angeordnet. Der erste Reifen 12 und der zweite Reifen 13 sind auf den Rädern 21 beziehungsweise 22 angeordnet.

Die erste Radmittelebene 19 des ersten Reifens 12 bildet mit einem Fahrtrichtungsvektor 36 des Fahrzeugs 35 eine erste Spur 37 aus. Die zweite Radmittelebene 20 des zweiten Reifens 13 bildet mit dem Fahrtrichtungsvektor 36 des Fahrzeugs 35 eine zweite Spur 38 aus.

### Bezugszeichenliste

### (Teil der Beschreibung)

- 1: Verfahrenseinleitungsschritt
- 2: Bereitstellungsschritt
- 3: Erfassungsschritt
- 4: Vergleichsschritt
- 5: Erzeugungsschritt
- 6: Zweiter Vergleichsschritt
- 7: Zweiter Erzeugungsschritt
- 8: Vorrichtung
- 9: Erste Sensorvorrichtung
- 10: Zweite Sensorvorrichtung
- 11: Auswertevorrichtung
- 12: Erster Reifen
- 13: Zweiter Reifen
- 14: Gemeinsame Achse
- 15: Rotationsachse des ersten Reifens
- 16: Rotationsachse des zweiten Reifens
- 17: Umlaufrichtung des ersten Reifens
- 18: Umlaufrichtung des zweiten Reifens
- 19: Erste Radmittelebene
- 20: Zweite Radmittelebene
- 21: Erstes Rad
- 22: Zweites Rad
- 23: Wiedergabevorrichtung
- 24: Fahrbahn
- 25: Bodenaufstandsflächenbereich des ersten Reifens
- 26: Bodenaufstandsflächenbereich des zweiten Reifens
- 27: Radsturz der ersten Radmittelebene
- 28: Radsturz der zweiten Radmittelebene
- 29: Normalvektor der Fahrbahn
- 30: Vorrichtung
- 31: Reifeninnenfläche des ersten Reifens
- 32: Reifeninnenfläche des zweiten Riefens
- 33: Erste Felge
- 34: Zweite Felge
- 35: Fahrzeug
- 36: Fahrtrichtungsvektor
- 37: Erste Spur
- 38: Zweite Spur

## Patentansprüche

1. Verfahren zur Bestimmung eines Radsturzes (27, 28) oder einer Spur (37, 38), aufweisend folgende Schritte:
a) Bereitstellen (2) mindesten einer ersten Sensorvorrichtung (9) und mindestens einer zweiten Sensorvorrichtung (10) und mindestens einer Auswertevorrichtung (11), wobei die mindestens eine erste Sensorvorrichtung (9) und die mindestens eine zweite Sensorvorrichtung (10) zur Erfassung von Beschleunigungen vorgesehen sind;
b) Erfassen (3) eines ersten Beschleunigungswertes eines ersten Reifens (12) und Erfassen (3) eines zweiten Beschleunigungswertes eines zweiten Reifens (13), wobei der erste Reifen (12) und der zweite Reifen (13) auf einer gemeinsamen Achse (14) angeordnet sind und es sich bei dem ersten Beschleunigungswert und dem zweiten Beschleunigungswert um Werte von Beschleunigungen des ersten Reifens (12) und des zweiten Reifens (13) handelt, wobei die Beschleunigungen jeweils parallel zu der Rotationsachse (15) des ersten Reifens (12) beziehungsweise der Rotationsachse (16) des zweiten Reifens (13) gerichtet sind;
c) Vergleichen (4) des ersten Beschleunigungswertes mit dem zweiten Beschleunigungswert;
d) Erzeugen (5) eines Vergleichswertes anhand des Vergleichs des ersten Beschleunigungswertes mit dem zweiten Beschleunigungswert;
e) Vergleichen (6) des Vergleichswertes mit einem Referenzwert mittels der mindestens einen Auswertevorrichtung (11),
f) Erzeugen (7) einer Ergebnisinformation mittels der mindestens einen Auswertevorrichtung (11), wobei die Ergebnisinformation in Abhängigkeit des Vergleichs des Vergleichswertes mit dem Referenzwert gewonnen wurde.

2. Verfahren nach dem vorhergehenden Anspruch, **dadurch gekennzeichnet, dass** in Abhängigkeit der Ergebnisinformation ein erster Radsturz (27) und/oder eine erste Spur (37) eines ersten Rades (21) und ein zweiter Radsturz (29) und/oder eine zweite Spur (38) eines zweiten Rades (22) ermittelt werden, wobei der erste Reifen (12) auf dem ersten Rad (21) angeordnet ist und der zweite Reifen (13) auf dem zweiten Rad (22) angeordnet ist.

3. Verfahren nach einem der vorhergehenden Ansprüche, **dadurch gekennzeichnet, dass** der erste Beschleunigungswert und der zweite Beschleunigungswert in jeweils regelmäßigen Zeitabständen erfasst werden oder, dass der erste Beschleunigungswert genau einmal während jeder vollständigen Umdrehung des ersten Reifens (12) und der zweite Beschleunigungswert genau einmal während jeder vollständigen Umdrehung des zweiten Reifens (13) erfasst werden.

4. Verfahren nach einem der vorhergehenden Ansprüche, **dadurch gekennzeichnet, dass** für den Fall, wonach die mindestens eine erste Sensorvorrichtung (9) an einer Reifeninnenfläche (31) des ersten Reifens (12) angeordnet ist und die mindestens eine zweite Sensorvorrichtung (10) an einer Reifeninnenfläche (32) des zweiten Reifens (13) angeordnet ist, der erste Beschleunigungswert erfasst wird, wenn sich die mindestens eine erste Sensorvorrichtung (9) nicht in einem Bodenaufstandsflächenbereich (25) des ersten Reifens (12) befindet, und der zweite Beschleunigungswert erfasst wird, wenn sich die mindestens eine zweite Sensorvorrichtung (10) nicht in einem Bodenaufstandsflächenbereich (26) des zweiten Reifens (13) befindet.

5. Verfahren nach einem der vorhergehenden Ansprüche, **dadurch gekennzeichnet, dass** die Ergebnisinformation an mindestens eine Wiedergabevorrichtung (23) übertragen und von der mindestens einen Wiedergabevorrichtung (23) wiedergegeben wird.

6. Verfahren nach einem der vorhergehenden Ansprüche, **dadurch gekennzeichnet, dass** mittels der mindestens einen ersten Sensorvorrichtung (9) und mittels der mindestens einen zweiten Sensorvorrichtung (10) jeweils ein weiterer Beschleunigungswert erfasst wird, wobei es sich bei den weiteren Beschleunigungswerten um Werte von Beschleunigungen handelt, die parallel und/oder rechtwinklig zu einer Umlaufrichtung (17) des ersten Reifens (12) beziehungsweise parallel und/oder rechtwinklig zu einer Umlaufrichtung (18) des zweiten Reifens (13) gerichtet sind und/oder es sich bei den weiteren Beschleunigungswerten um Werte von Beschleunigungen handelt, die rechtwinklig zu der Rotationsachse (15) des ersten Reifens (12) beziehungsweise rechtwinklig zu der Rotationsachse (16) des zweiten Reifens (13) gerichtet sind.

7. Verfahren nach einem der vorhergehenden Ansprüche, **dadurch gekennzeichnet, dass** mittels der mindestens einen Auswertevorrichtung (11) ein erster erster Beschleunigungswert des ersten Reifens (12) mit einem zeitlich danach erfassten zweiten ersten Beschleunigungswert des ersten Reifens (12) verglichen wird und/oder ein erster zweiter Beschleunigungswert des zweiten Reifens (13) mit einem zeitlich danach erfassten zweiten zweiten Beschleunigungswert des zweiten Reifens (13) verglichen wird.

## Claims

1. Method for determining a wheel camber (27, 28) or toe (37, 38), comprising the following steps:
a) providing (2) at least one first sensor device (9) and at least one second sensor device (10) and at least one evaluation device (11), wherein the at least one first sensor device (9) and the at least one second sensor device (10) are intended for sensing accelerations;
b) sensing (3) a first acceleration value of a first tyre (12) and sensing (3) a second acceleration value of a second tyre (13), wherein the first tyre (12) and the second tyre (13) are arranged on a common axis (14) and the first acceleration value and the second acceleration value are values of accelerations of the first tyre (12) and of the second tyre (13), wherein the accelerations are respectively directed parallel to the axis of rotation (15) of the first tyre (12) or the axis of rotation (16) of the second tyre (13);
c) comparing (4) the first acceleration value with the second acceleration value;
d) generating (5) a comparison value on the basis of the comparison of the first acceleration value with the second acceleration value;
e) comparing (6) the comparison value with a reference value by means of the at least one evaluation device (11);
f) generating (7) result information by means of the at least one evaluation device (11), wherein the result information was obtained in dependence on the comparison of the comparison value with the reference value.

2. Method according to the preceding claim, **characterized in that**, in dependence on the result information, a first wheel camber (27) and/or a first toe (37) of a first wheel (21) and a second wheel camber (29) and/or a second toe (38) of a second wheel (22) are determined, wherein the first tyre (12) is arranged on the first wheel (21) and the second tyre (13) is arranged on the second wheel (22).

3. Method according to one of the preceding claims, **characterized in that** the first acceleration value and the second acceleration value are respectively sensed at regular time intervals or **in that** the first acceleration value is sensed just once during each complete revolution of the first tyre (12) and the second acceleration value is sensed just once during each complete revolution of the second tyre (13).

4. Method according to one of the preceding claims, **characterized in that**, for the case where the at least one first sensor device (9) is arranged on an inner tyre surface (31) of the first tyre (12) and the at least one second sensor device (10) is arranged on an inner tyre surface (32) of the second tyre (13), the first acceleration value is sensed when the at least one first sensor device (9) is not in a ground contact area region (25) of the first tyre (12) and the second acceleration value is sensed when the at least one second sensor device (10) is not in a ground contact area region (26) of the second tyre (13).

5. Method according to one of the preceding claims, **characterized in that** the result information is transmitted to at least one playback device (23) and is played back by the at least one playback device (23).

6. Method according to one of the preceding claims, **characterized in that** a further acceleration value is respectively sensed by means of the at least one first sensor device (9) and by means of the at least one second sensor device (10), wherein the further acceleration values are values of accelerations which are directed parallel and/or right angles to a direction of rotation (17) of the first tyre (12) or parallel and/or at right angles to a direction of rotation (18) of the second tyre (13) and/or the further acceleration values are values of accelerations which are directed at right angles to the axis of rotation (15) of the first tyre (12) or at right angles to the axis of rotation (16) of the second tyre (13).

7. Method according to one of the preceding claims, **characterized in that**, by means of the at least one evaluation device (11), a first first acceleration value of the first tyre (12) is compared with a second first acceleration value of the first tyre (12), sensed at a time after it, and/or a first second acceleration value of the second tyre (13) is compared with a second second acceleration value of the second tyre (13), sensed at a time after it.

## Revendications

1. Procédé de détermination d'un carrossage (27, 28) ou d'un alignement (37, 38), ledit procédé comportant les étapes suivantes :
a) fournir (2) au moins un premier dispositif de détection (9) et au moins un deuxième dispositif de détection (10) et au moins un dispositif d'évaluation (11), l'au moins un premier dispositif de détection (9) et l'au moins un deuxième dispositif de détection (10) étant prévus pour détecter des accélérations ;
b) détecter (3) une première valeur d'accélération d'un premier pneumatique (12) et détecter (3) une deuxième valeur d'accélération d'un deuxième pneumatique (13), le premier pneumatique (12) et le deuxième pneumatique (13) étant disposés sur un essieu commun (14) et la première valeur d'accélération et la deuxième valeur d'accélération étant des valeurs d'accélération du premier pneumatique (12) et du deuxième pneumatique (13), les accélérations étant dirigées chacune parallèlement à l'axe de rotation (15) du premier pneumatique (12) ou à l'axe de rotation (16) du deuxième pneumatique (13) ;
c) comparer (4) la première valeur d'accélération à la deuxième valeur d'accélération ;
d) générer (5) une valeur de comparaison sur la base de la comparaison de la première valeur d'accélération à la deuxième valeur d'accélération ;
e) comparer (6) la valeur de comparaison à une valeur de référence au moyen de l'au moins un dispositif d'évaluation (11) ;
f) générer (7) une information de résultat au moyen de l'au moins un dispositif d'évaluation (11), l'information de résultat ayant été obtenue en fonction de la comparaison de la valeur de comparaison à la valeur de référence.

2. Procédé selon la revendication précédente, **caractérisé en ce qu'**un premier carrossage (27) et/ou un premier alignement (37) d'une première roue (21) et un deuxième carrossage (29) et/ou un deuxième alignement (38) d'une deuxième roue (22) sont déterminées en fonction de l'information de résultat, le premier pneumatique (12) étant disposé sur la première roue (21) et le deuxième pneumatique (13) étant disposé sur la deuxième roue (22).

3. Procédé selon l'une des revendications précédentes, **caractérisé en ce que** la première valeur d'accélération et la deuxième valeur d'accélération sont acquises à intervalles de temps réguliers, ou **en ce que** la première valeur d'accélération est acquise une seule fois à chaque tour complet du premier pneumatique (12) et la deuxième valeur d'accélération est acquise une seule fois à chaque tour complet du deuxième pneumatique (13).

4. Procédé selon l'une des revendications précédentes, **caractérisé en ce que**, dans le cas où l'au moins un premier dispositif de détection (9) est disposé sur une surface intérieure (31) du premier pneumatique (12) et l'au moins un deuxième dispositif de détection (10) est disposé sur une surface intérieure (32) du deuxième pneumatique (13), la première valeur d'accélération est acquise lorsque l'au moins un premier dispositif de détection (9) n'est pas situé dans une zone de surface d'appui au sol (25) du premier pneumatique (12), et la deuxième valeur d'accélération est acquise lorsque l'au moins un deuxième dispositif de détection (10) n'est pas situé dans une zone de surface d'appui au sol (26) du deuxième pneumatique (13).

5. Procédé selon l'une des revendications précédentes, **caractérisé en ce que** l'information de résultat est transmise à au moins un dispositif de reproduction (23) et est reproduite par l'au moins un dispositif de reproduction (23).

6. Procédé selon l'une des revendications précédentes, **caractérisé en ce qu'**une autre valeur d'accélération est acquise à chaque fois au moyen de l'au moins un premier dispositif de détection (9) et au moyen de l'au moins un deuxième dispositif de détection (10), les autres valeurs d'accélération étant des valeurs d'accélérations qui sont dirigées parallèlement et/ou perpendiculairement à un sens de rotation (17) du premier pneumatique (12) ou parallèlement et/ou perpendiculairement à un sens de rotation (18) du deuxième pneumatique (13) et/ou les autres valeurs d'accélération étant des valeurs d'accélérations qui sont dirigées perpendiculairement à l'axe de rotation (15) du premier pneumatique (12) ou perpendiculairement à l'axe de rotation (16) du deuxième pneumatique (13).

7. Procédé selon l'une des revendications précédentes, **caractérisé en ce qu'**une première première valeur d'accélération du premier pneumatique (12) est comparée à une deuxième première valeur d'accélération du premier pneumatique (12) qui est acquise chronologiquement par la suite, et/ou une première deuxième valeur d'accélération du deuxième pneumatique (13) est comparée à une deuxième deuxième valeur d'accélération du deuxième pneumatique (13) qui est acquise chronologiquement par la suite, au moyen de l'au moins un dispositif d'évaluation (11).
